(19) Europäisches Patentamt
European Patent Office
Office européen des brevets

(11) **EP 1 747 973 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(51) Int Cl.:
***B62D 15/02*** *(2006.01)*    *G01S 13/93* *(2006.01)*

(21) Anmeldenummer: **06115658.4**

(22) Anmeldetag: **19.06.2006**

(54) **Verfahren zur Unterstützung eines Einparkvorgangs eines Fahrzeugs**

Method for assisting in vehicle parking

Méthode pour assister le stationnement d'un véhicule

(84) Benannte Vertragsstaaten:
**DE FR GB IT SE**

(30) Priorität: **26.07.2005 DE 102005034699**

(43) Veröffentlichungstag der Anmeldung:
**31.01.2007 Patentblatt 2007/05**

(73) Patentinhaber: **ROBERT BOSCH GMBH**
**70442 Stuttgart (DE)**

(72) Erfinder:
• **Fehse, Meike**
**71229, Leonberg (DE)**
• **Faber, Petko**
**71229, Leonberg (DE)**

(56) Entgegenhaltungen:
**WO-A-2005/085044    WO-A-2005/120932**
**DE-A1- 10 225 894**

**Beschreibung**

Stand der Technik

Die Erfindung betrifft ein Verfahren zur Unterstützung eines Einparkvorgangs eines Fahrzeugs in eine seitlich zu dem zu parkenden Fahrzeug angeordnete Parklücke, wobei mittels einer Sensoranordnung des Fahrzeugs eine Länge und/oder eine Tiefe der Parklücke während eines Vorbeifahrens des Fahrzeugs an der Parklücke erfasst wird.

Ein derartiges Verfahren ist als Funktion einer als Assistent für einen Fahrer des Fahrzeugs dienenden Parklückenlokalisierung, für die eine andere Bezeichnung Parking Space Localization (PSL) ist, zum Auffinden einer Parklücke im Allgemeinen bekannt. Insbesondere ist das Verfahren als Funktion einer Parklückenvermessung (PLV), die den Fahrer eines Fahrzeugs bei der Suche nach einer ausreichend großen Parklücke für sein Fahrzeug unterstützt, bekannt, wobei die Parklückenlokalisierung eine Verallgemeinerung der Parklückenvermessung darstellt. Die Parklückenvermessung kann mit einem Einparksystem zum semi-autonomen Einparken zusammenarbeiten, bei dem der Fahrer Fahr- und Bremspedal des Fahrzeugs bedienen muss, wohingegen das Lenken auch automatisch ausgeführt werden kann. Das System berechnet eine Bahnkurve für das Einparken des Fahrzeugs in die Parklücke und informiert den Fahrer, zum Beispiel mit Hilfe von akustischen Signalen, über die Aktionen, die er auszuführen hat, um das Fahrzeug in der Parklücke abzustellen. Ein Grundsatz dabei ist, dass das Fahrzeug weder eine seitliche noch eine vordere oder hintere Parklückenbegrenzung, beispielsweise einen Bordstein und/oder bereits parkende Fahrzeuge, touchieren oder gar an- oder überfahren darf. Umso genauer die Länge und/oder die Tiefe der Parklücke erfasst wird, umso zuverlässiger kann ein Einparkvorgang erfolgen.

Darüber hinaus ist aus der gattungsbildenden DE 102 51 558 A1 ein Verfahren zur Ermittlung von Geometriedaten für Einparkvorgänge von Fahrzeugen bekannt. Dabei soll während eines seitlichen Entlangfahrens eines Fahrzeugs an einem Parkplatz mehrmals nacheinander der seitliche Abstand zwischen dem Fahrzeug und einem Fahrbahnrand mittels eines fahrzeugfesten Abstandssensors gemessen werden. Ferner soll die Länge der Parklücke über einen bei einem Passieren der Parklücke zurückgelegten Fahrweg erfasst werden. Eine kurvenförmige Vorbeifahrt an der Parklücke soll durch Berücksichtigung eines mathematischen Fahrzeugmodells und einer Erfassung eines Winkels zwischen der Fahrzeuglängsrichtung und dem Fahrbahnrand ausgeglichen werden.

Weiterhin offenbart DE 102 20 426 A1 ein Verfahren zum Betreiben eines Parkhilfesystems für ein Fahrzeug, welches Verfahren unter anderem ein automatisches Abbremsen und/oder Beschleunigen des Fahrzeugs während eines Ein- und/oder Ausparkablaufs unter allgemeiner Berücksichtigung einer Bestimmung einer Länge und/oder einer Breite einer Parklücke bei einem Vorbeifahren des Fahrzeugs an der Parklücke umfasst. Anschließend wird ein Einparkablauf für das Fahrzeug in die Parklücke bestimmt. Während des folgenden Einparkablaufs wird aufgrund eines momentanen Lenkradeinschlags eine zukünftige Lenkwinkeländerung bestimmt und dem Fahrer mitgeteilt.

Der Erfindung liegt die Aufgabe zugrunde, ein Verfahren der eingangs beschriebenen Art zur Unterstützung eines Einparkvorgangs eines Fahrzeugs anzugeben, das eine Erfassung der Länge und/oder der Tiefe der Parklücke mit hoher Genauigkeit ermöglicht.

Diese Aufgabe wird erfindungsgemäß mit einem Verfahren der eingangs beschriebenen Art dadurch gelöst, dass der Lenkwinkel des Fahrzeugs während des Vorbeifahrens an der Parklücke gemessen wird, dass die Orientierung von die Parklücke begrenzenden Begrenzungsobjekten bezüglich des Fahrzeugs bestimmt wird, dass der Lenkwinkel mit der Orientierung der Begrenzungsobjekte verglichen wird und dass in Abhängigkeit des Vergleichs des Lenkwinkels mit der Orientierung der Begrenzungsobjekte die Länge und/oder die Tiefe der Parklücke berechnet wird.

Vorteile der Erfindung

Nach dem erfindungsgemäßen Verfahren wird somit die Parklücke bei einem Vorbeifahren des einzuparkenden (oder mit anderen Worten: zu parkenden) Fahrzeugs erfasst und vermessen. Zur Erfassung und Vermessung der Parklücke sind in der Sensoranordnung bevorzugt seitlich bezüglich des Fahrzeugs ausgerichtete Sensoren vorgesehen. Mit dem erfindungsgemäßen Verfahren, das insbesondere ein Rückwärtseinparken betrifft und sich vor allem für Kraftfahrzeuge, und zwar sowohl für Personenkraftwagen als auch für Nutzfahrzeuge, eignet, werden vorteilhaft mögliche Fehler bezüglich der Ausmessung der Parklücke ausgeschaltet oder zumindest reduziert, welche aus einer in einem Bogen angeordneten Parklücke und/oder einer kurvigen Vorbeifahrt des zu parkenden Fahrzeugs an der Parklücke resultieren. Aufgrund der dadurch ermöglichten verbesserten Vorhersagegenauigkeit können einerseits überflüssige Einparkversuche in tatsächlich zu kleine, aber fehlerbehaftet zu groß vermessene Parklücken vermieden werden, und andererseits können auch vergleichsweise kleine Parklücken genutzt werden, die ohne die Erfindung angesichts nicht ausgeschalteter Fehlerquellen zu groß vermessen würden. Das ist von besonderer Bedeutung, als eine zunehmende Verkehrsdichte und eine verstärkte Bebauung freier Flächen den Verkehrsraum nicht nur in Ballungszentren fortschreitend einengen. Vorzugsweise kann die Erfindung in einem semi-autonomen oder autonomen Einparksystem eingesetzt werden und die Funktion und Zuverlässigkeit des Einparksystems verbessern. Die Begrenzungsobjekte können beliebige, die Parklücke begrenzende Objekte wie beispielsweise ein bereits parkendes Fahrzeug, einen Bordstein oder einen Baum umfassen. Mit der Erfindung kann vorteilhaft sowohl eine beliebige Kurvenfahrt des zu parkenden Fahrzeugs als auch eine beliebig kurvige Anordnung der Parklücke korrigiert werden. Dabei ist es von besonderem Vorteil, dass nicht in jedem Fall eine Korrektur vorgenommen werden muss, sondern dass in Abhängigkeit des Vergleichs des Lenkwinkels mit der Orientierung der Begrenzungsobjekte zum Beispiel eine Entscheidung darüber erfolgen kann, ob für die weitere Berechnung der Länge und/oder der Tiefe der Parklücke der Lenkwinkel zu berücksichtigen ist oder nicht, so dass der Aufwand für das erfindungsgemäße Verfahren sehr gering gehalten werden kann. Die Orientierung der Begrenzungsobjekte kann beispielsweise aus Abstandswerten zu dem zu parkenden Fahrzeug gewonnen werden.

Die Erfindung geht aus von einer Bestimmung der Orientierung von die Parklücke begrenzenden Begrenzungsobjekten bezüglich des zu parkenden Fahrzeugs, das heißt der durch einen Orientierungswinkel $\lambda_i$ angegebenen relativen Orientierung des zu parkenden Fahrzeugs bei einem Wegpunkt $s_i$ bezogen auf das als Referenzobjekt dienende Begrenzungsobjekt. Der Orientierungswinkel $\lambda_i$ ist der Winkel zwischen der Längsachse des zu parkenden Fahrzeugs und einer Parallelen zu der Längsachse des Begrenzungsobjekts. Bei dem nachfolgenden Vergleich von Lenkwinkel des zu parkenden Fahrzeugs und Orientierung wird geprüft, ob eine aktive Kurvenfahrt des zu parkenden Fahrzeugs, das heißt ein Vorbeifahren des Fahrzeugs auf einer Kurvenbahn an einer entsprechend in der Kurve liegenden Parklücke, oder eine passive Kurvenfahrt, das heißt ein Vorbeifahren des Fahrzeugs auf einer Kurvenbahn an einer an einer Geraden liegenden Parklücke, oder ob gar keine Kurvenfahrt vorliegt. Ist der Orientierungswinkel gleich 0° ($\lambda_i = 0°$) und der Lenkwinkel ungleich 0°, so liegt eine aktive Kurvenfahrt vor. Ist der Orientierungswinkel ungleich 0° ($\lambda_i \neq 0°$) und der Lenkwinkel ebenfalls ungleich 0°, so liegt eine passive Kurvenfahrt vor. Bei einem Orientierungswinkel von 0° ($\lambda_i = 0°$) und einem Lenkwinkel von ebenfalls 0° liegt eine Geradenfahrt, also keine Kurvenfahrt, vor. Dabei umfasst ein Winkel von 0° jeweils auch einen Toleranzbereich, der vordefinierbare Abweichungen von 0° zulässt.

Gegenüber einer an sich bekannten Berechnung der Länge und/oder der Tiefe der Parklücke berücksichtigt die Erfindung zusätzlich einen sich aufgrund einer Kurvenfahrt des zu parkenden Fahrzeugs ergebenden Fehler bei der Längen und/oder Tiefenberechnung: Bei einer aktiven Kurvenfahrt des zu parkenden Fahrzeugs wird ein Korrekturwert als Längenkorrekturwert $\Delta s_{iK}$ bei der Berechnung der Länge der Parklücke berücksichtigt, der sich beispielhaft gemäß folgendem Zusammenhang ergibt:

$$\Delta s_{iK} = f(s_i) = s_i \cdot \frac{D}{R},$$

wobei R der Radius der Bahn, die das zu parkende Fahrzeug während seiner Kurvenfahrt befährt, D der mittlere Vorbeifahrabstand des zu parkenden Fahrzeugs von einer seitlichen Parklückenbegrenzung und $s_i$ der momentane Wegpunkt ist.

Ferner ergibt sich bei einer aktiven Kurvenfahrt des zu parkenden Fahrzeugs ein Korrekturwert als Tiefenkorrekturwert $\Delta d_{iK}$, der bei der Berechnung der Tiefe der Parklücke berücksichtigt wird, beispielhaft gemäß folgendem Zusammenhang:

$$\Delta d_{iK} = f(d_i) = 0,$$

das heißt der zu berücksichtigende Tiefenkorrekturwert ist in diesem Fall gleich null.

Bei einer passiven Kurvenfahrt des zu parkenden Fahrzeugs wird ein Korrekturwert als Längenkorrekturwert $\Delta s_{iK}$ bei der Berechnung der Länge der Parklücke berücksichtigt, der sich beispielhaft gemäß folgendem Zusammenhang ergibt:

$$\Delta s_{iK} = f(d_i) = d_i \cdot \sin\lambda_i,$$

wobei $\lambda_i$ den oben genannten Orientierungswinkel und $d_i$ einen momentan gemessenen Vorbeifahrabstand zwischen zu parkendem Fahrzeug und Begrenzungsobjekt angeben.

Darüber hinaus ergibt sich bei einer passiven Kurvenfahrt des zu parkenden Fahrzeugs entsprechend ein Korrekturwert als Tiefenkorrekturwert $\Delta d_{iK}$, der bei der Berechnung der Tiefe der Parklücke berücksichtigt wird, beispielhaft gemäß folgendem Zusammenhang:

$$\Delta d_{iK} = f(d_i) = d_i \cdot (1 - \cos \lambda_i).$$

Allgemein gilt somit zum Ausgleich einer Kurvenfahrt des zu parkenden Fahrzeugs zusammenfassend für eine Korrektur der Länge der Parklücke der eine Korrekturlänge angebende Zusammenhang $\Delta L = f(\Delta s_{iK})$ und für eine Korrektur der Tiefe der Parklücke der eine Korrekturtiefe angebende Zusammenhang $\Delta T = f(\Delta d_{iK})$.

Die Schnelligkeit und Zuverlässigkeit des erfindungsgemäßen Verfahrens kann vorteilhaft mittels einer Klassifikation der Begrenzungsobjekte erhöht werden. Dabei könnte man sich zum Beispiel vorstellen, dass allgemein aus momentan ermittelten Messwerten auf bestimmte Objekte geschlossen wird. Demgegenüber ist es für ein einfaches, sicheres Verfahren von besonderem Vorteil, wenn zu erwartende Begrenzungsobjekte in Form von geometrischen Daten der zu erwartenden Begrenzungsobjekte in einem Speicher abgelegt sind, die mittels der Sensoranordnung erfassten Begrenzungsobjekte jeweils einem der in dem Speicher abgelegten Begrenzungsobjekte zugeordnet werden und jeweils das in dem Speicher abgelegte Begrenzungsobjekt für das erfasste Begrenzungsobjekt angenommen wird. Dabei sind somit Daten bezüglich zu erwartender Begrenzungsobjekte bereits zum Beispiel in dem Einparksystem abgelegt, so dass der Rechenaufwand zur Bestimmung eines Begrenzungsobjektes reduziert werden kann.

Vorteilhaft lässt sich die Position des zu parkenden Fahrzeugs hinsichtlich Begrenzungsobjekten und Parklücke besonders genau bestimmen und damit beispielsweise auch eine präzise Einparkbahnplanung für das Fahrzeug vornehmen, wenn in Abhängigkeit von dem Lenkwinkel des Fahrzeugs und der Orientierung der Begrenzungsobjekte jeweils ein Vorbeifahrabstand des Fahrzeugs von den Begrenzungsobjekten berechnet wird.

Wird anhand des Lenkwinkels ein Fahrzeugbahnradius einer von dem Fahrzeug während des Vorbeifahrens an der Parklücke befolgten Fahrzeugbahn bestimmt, so kann vorteilhaft und auf einfache Weise über den Fahrzeugbahnradius das Ausmaß einer Kurvenfahrt des Fahrzeugs für das erfindungsgemäße Verfahren genauigkeitserhöhend berücksichtigt werden.

Fehler, die von einem ungeraden Verlauf einer Fahrbahn und insbesondere der Parklücke hervorgerufen werden können, lassen sich bei dem erfindungsgemäßen Verfahren vorteilhaft dadurch vermeiden, dass anhand der Orientierung der Begrenzungsobjekte ein Fahrbahnradius einer von dem Fahrzeug befahrenen Fahrbahn bestimmt wird.

Besonders günstig für die Präzision des erfindungsgemäßen Verfahrens ist es, wenn in Abhängigkeit des Fahrbahnradius und einer Breite eines vorderen Begrenzungsobjektes und/oder eines hinteren Begrenzungsobjektes ein minimaler Parklückenradius bestimmt wird.

Vor allem bei einer aktiven Kurvenfahrt, das heißt insbesondere bei einer einen Kurvenverlauf aufweisenden Fahrzeugbahn und einer ebenfalls einen Kurvenverlauf aufweisenden Fahrbahn, ist es zur Ausschaltung von Fehlerquellen bei dem erfindungsgemäßen Verfahren vorteilhaft, wenn bei einem Lenkwinkel kleiner 0° oder größer 0° während des Vorbeifahrens und einer Orientierung der Begrenzungsobjekte von 0° die Länge der Parklücke in Abhängigkeit des minimalen Parklückenradius, des Vorbeifahrabstands und einer Breite eines vorderen Begrenzungsobjektes und/oder eines hinteren Begrenzungsobjektes berechnet wird. Die Orientierung der Begrenzungsobjekte kann dabei innerhalb eines Toleranzbandes auch ein wenig von 0° abweichen. Ein Lenkwinkel kleiner 0° bedeutet eine konvexe Kurvenfahrt des zu parkenden Fahrzeugs, ein Lenkwinkel größer 0° eine konkave Kurvenfahrt.

Demgegenüber ist es bei einer passiven Kurvenfahrt, das heißt insbesondere bei einer einen Kurvenverlauf aufweisenden Fahrzeugbahn und einer in etwa gerade verlaufenden Fahrbahn, von Vorteil für die Präzision des erfindungsgemäßen Verfahrens, wenn bei einem Lenkwinkel kleiner 0° oder größer 0° während des Vorbeifahrens und einer einen Vorzeichenwechsel aufweisenden Änderung einer Orientierung der Begrenzungsobjekte die Länge der Parklücke in Abhängigkeit von in einem Speicher abgelegten geometrischen Daten des Fahrzeugs berechnet wird.

Aufgrund ihrer vergleichsweise großen Reichweite ist es günstig, in der Sensoranordnung Sensoren mit einem keulenförmigen Sensorfeld zu verwenden. Zur Korrektur von auf einem Einfluss einer externen Ausrichtung eines solchen Sensorfeldes beruhenden Ungenauigkeiten ist es von Vorteil, wenn die Sensoranordnung einen ein keulenförmiges Sensorfeld aufweisenden Sensor umfasst und eine Position einer dem Fahrzeug zugewandten Ecke der Parklücke in Abhängigkeit von einem Einbauwinkel des Sensors im Fahrzeug bestimmt wird. Die Ecke der Parklücke kann, nur zum Beispiel, eine vordere linke Ecke eines am rechten Fahrbahnrand und hinter der Parklücke, diese begrenzend, bereits abgestellten Fahrzeugs sein.

Zur Korrektur von auf einem Einfluss eines internen Öffnungswinkels eines keulenförmigen Sensorfeldes beruhenden Ungenauigkeiten ist es vorteilhaft, wenn die Sensoranordnung einen ein keulenförmiges Sensorfeld aufweisenden Sensor umfasst und eine Position einer dem Fahrzeug zugewandten Ecke der Parklücke in Abhängigkeit von einem Öffnungswinkel des Sensorfeldes bestimmt wird.

Eine Korrektur von auf Signallaufzeiten von Sensorsignalen beruhenden möglichen Fehlern lässt sich auf einfache Weise dadurch erreichen, dass der während des Laufs eines Signals von der Sensoranordnung des Fahrzeugs zu einem Begrenzungsobjekt und zurück zu der Sensoranordnung zurückgelegte Weg des Fahrzeugs bestimmt wird und dass in Abhängigkeit von dem zurückgelegten Weg ein Vorbeifahrabstand des Fahrzeugs von dem Begrenzungsobjekt berechnet wird. Vorzugsweise gilt für eine umfassende Korrektur der Länge der Parklücke der folgende Zusammenhang:

$$\text{Korrekturlänge } \Delta L = f(\text{Längenkorrekturwert } \Delta s_{iK} \text{ für Kurvenfahrt, Einbauwinkel } \gamma,$$

$$\text{Öffnungswinkel } \alpha, \text{ Signallaufzeit})$$

und für eine umfassende Korrektur der Tiefe der Parklücke der folgende Zusammenhang:

$$\text{Korrekturtiefe } \Delta T = f(\text{Tiefenkorrekturwert } \Delta d_{iK} \text{ für Kurvenfahrt, Einbauwinkel } \gamma,$$

$$\text{Öffnungswinkel } \alpha, \text{ Signallaufzeit}).$$

Öffnungswinkel $\alpha$, Signallaufzeit).

Grundsätzlich kann die genaue Kenntnis der Länge und/oder der Tiefe der Parklücke, angezeigt beispielsweise auf einem Bildschirm in einer Armaturentafel des Fahrzeugs, für den Fahrer des Fahrzeugs zum Einparken bereits sehr hilfreich sein. Hingegen wird die Unterstützung des Einparkvorgangs zusätzlich erheblich verbessert, wenn in Abhängigkeit der berechneten Länge und/oder Tiefe der Parklücke eine von dem Fahrzeug während des Einparkvorgangs zu verfolgende Einparkbahn berechnet wird.

Zeichnung

Verschiedene Ausführungsbeispiele der Erfindung sind in der Zeichnung schematisiert dargestellt und werden nachfolgend näher beschrieben. Es zeigen

| | |
|---|---|
| Figur 1 | eine erste Einparksituation bei einer passiven Kurvenfahrt eines einzuparkenden Fahrzeugs, |
| Figur 2 | ein Detail der Einparksituation nach Figur 1, |
| Figur 3 | eine zweite Einparksituation bei einer aktiven Kurvenfahrt eines einzuparkenden Fahrzeugs, |
| Figuren 4, 5 | einen Einfluss einer Signallaufzeit eines Sensors auf eine seitliche Abstandsmessung, |
| Figur 6 | ein Detail der Einparksituation nach Figur 1, |
| Figur 7 | eine Veranschaulichung einer Korrektur unter Berücksichtigung eines Öffnungswinkels des Sensors und |
| Figur 8 | eine Veranschaulichung einer Korrektur unter Berücksichtigung eines Einbauwinkels des Sensors. |

Beschreibung der Ausführungsbeispiele

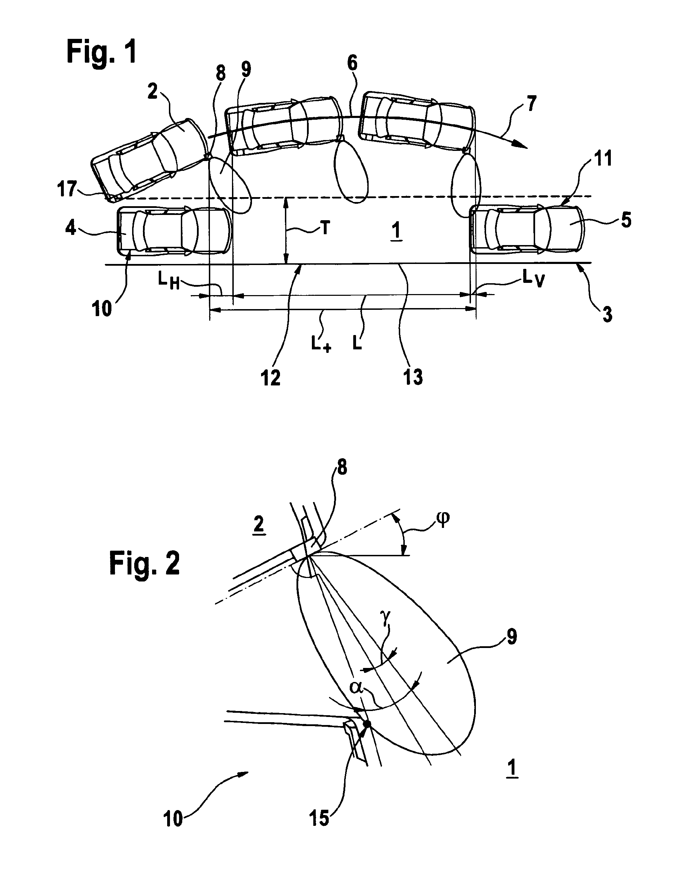

Figur 1 zeigt ein in eine seitliche Parklücke 1 einzuparkendes, als Personenkraftwagen ausgebildetes Fahrzeug 2. Die Parklücke 1 befindet sich an einer seitlichen Fahrbahnbegrenzung 3, die zum Beispiel von einem Bordstein gebildet sein kann, zwischen zwei bereits an der Fahrbahnbegrenzung 3 geparkten Fahrzeugen 4, 5. Das einzuparkende Fahrzeug 2, das auf einer Fahrzeugbahn 6 in einer durch einen Pfeil 7 symbolisierten Vorwärtsrichtung an der Parklücke 1 vorbeifährt, weist eine Sensoranordnung auf, von der hier beispielhaft ein auf der rechten Fahrzeugseite vorne angeordneter Sensor 8, vorteilhaft ein Ultraschallsensor oder ein Radarsensor, mit einem keulenförmigen Sensorfeld 9 und ein auf der rechten Fahrzeugseite hinten angeordneter Sensor 17 gezeigt ist. Beispielhaft ist das einzuparkende Fahrzeug 2 mit dem Sensorfeld 9 entlang der Fahrzeugbahn 6 zu drei verschiedenen Zeitpunkten dargestellt.

Es ist zu erkennen, dass die Fahrzeugbahn 6 des einzuparkenden Fahrzeugs 2 kurvenförmig, und zwar hier konvex, ausgebildet ist, wohingegen sich die Fahrbahnbegrenzung 3 und die geparkten Fahrzeuge 4, 5 in einer in etwa linearen Anordnung befinden. Man spricht in diesem Fall von einer passiven Kurvenfahrt des einzuparkenden Fahrzeugs 2 hinsichtlich der Parklücke 1.

Begrenzt wird die Parklücke 1 von einem ersten, hinteren Begrenzungsobjekt 10, das von einem ersten Fahrzeug 4 der bereits geparkten Fahrzeuge 4, 5 gebildet wird, von einem zweiten, vorderen Begrenzungsobjekt 11, das von dem zweiten Fahrzeug 5 der bereits geparkten Fahrzeuge 4, 5 gebildet wird, und von einem dritten, seitlichen Begrenzungsobjekt 12, das von einem Bordsteinabschnitt 13 der Fahrbahnbegrenzung 3 gebildet wird. Die Parklücke 1 weist eine Länge L und eine Tiefe T auf, die während des Vorbeifahrens des einzuparkenden Fahrzeugs 2 an der Parklücke 1 von der Sensoranordnung des Fahrzeugs 2 erfasst werden.

Gleichzeitig wird der Lenkwinkel des einzuparkenden Fahrzeuges 2 gemessen und die Orientierung der Begrenzungsobjekte 10, 11, 12 bezüglich des einzuparkenden Fahrzeugs 2 bestimmt. Nachfolgend wird der Lenkwinkel mit der Orientierung der Begrenzungsobjekte 10, 11, 12 verglichen, und in Abhängigkeit des Vergleichs des Lenkwinkels mit der Orientierung der Begrenzungsobjekte 10, 11, 12 werden die Länge L und die Tiefe T der Parklücke 1 mittels eines Steuergerätes eines Einparksystems des einzuparkenden Fahrzeugs 2 exakt berechnet.

In diesem Ausführungsbeispiel ist der Lenkwinkel des einzuparkenden Fahrzeugs 2 während des Vorbeifahrens an der Parklücke 1 kleiner 0°, und die Orientierung der Begrenzungsobjekte 10, 11, 12 - bezogen auf das einzuparkende Fahrzeug 2 - weist eine einen Vorzeichenwechsel beinhaltende Änderung auf; die Länge L der Parklücke 1 wird in Abhängigkeit von in einem Speicher des Steuergeräts abgelegten geometrischen Daten des einzuparkenden Fahrzeugs 2 berechnet.

Hinsichtlich der Begrenzungsobjekte 10, 11, 12 wird mit Hilfe des Steuergerätes des Einparksystems eine Objektklassifikation vorgenommen. Dabei sind zu erwartende Begrenzungsobjekte - etwa Fahrzeuge, Bäume, Hecken, Wände, Bordsteine - in Form von geometrischen Daten zu erwartender Begrenzungsobjekte in einem Speicher des Steuergerätes abgelegt. Die mittels der Sensoranordnung während des Vorbeifahrens des einzuparkenden Fahrzeugs 2 an der Parklücke 1 tatsächlich erfassten Begrenzungsobjekte 10, 11, 12 werden jeweils einem der in dem Speicher abgelegten Begrenzungsobjekte zugeordnet, und es wird von dem Einparksystem jeweils das in dem Speicher abgelegte Begrenzungsobjekt für das tatsächlich erfasste Begrenzungsobjekt angenommen.

Figur 2 zeigt im Detail die vordere rechte Fahrzeugecke des einzuparkenden Fahrzeugs 2 mit dem Sensor 8 und dem keulenförmigen Sensorfeld 9. Eine vordere linke Fahrzeugecke 15 des hinteren Begrenzungsobjektes 10 bildet eine dem einzuparkenden Fahrzeug 2 zugewandte Ecke der Parklücke 1, welche Ecke in Abhängigkeit von einem Einbauwinkel $\gamma$ des Sensors 8 im einzuparkenden Fahrzeug 2 und von einem Öffnungswinkel $\alpha$ des Sensorfeldes 9 bestimmt wird. Der Einbauwinkel $\gamma$ ist der Winkel zwischen einer Senkrechten zu der Fahrzeuglängsachse des einzuparkenden Fahrzeugs 2 und der Sensorhauptrichtung des Sensors 8. Eingezeichnet ist in Figur 2 ferner ein Gierwinkel $\varphi$ des einzuparkenden Fahrzeugs 2. Der Öffnungswinkel $\alpha$ ergibt sich als Funktion eines Vorbeifahrabstandes des einzuparkenden Fahrzeugs 2 an dem Begrenzungsobjekt 10 und des Gierwinkels $\varphi$.

Aufgrund der mittels des Einbauwinkels $\gamma$ des Sensors 8 und des Öffnungswinkels $\alpha$ des Sensorfeldes 9 vorgenommenen Korrektur wird die Länge L der Parklücke 1 exakt bestimmt. Ohne diese Korrektur würde - wie Figur 1 veranschaulicht - eine zu große Länge L+ als Parklückenlänge angenommen, die Korrektur führt zu einer Reduzierung um eine Länge $L_H$ am hinteren Ende und um eine Länge $L_V$ am vorderen Ende der Parklücke 1.

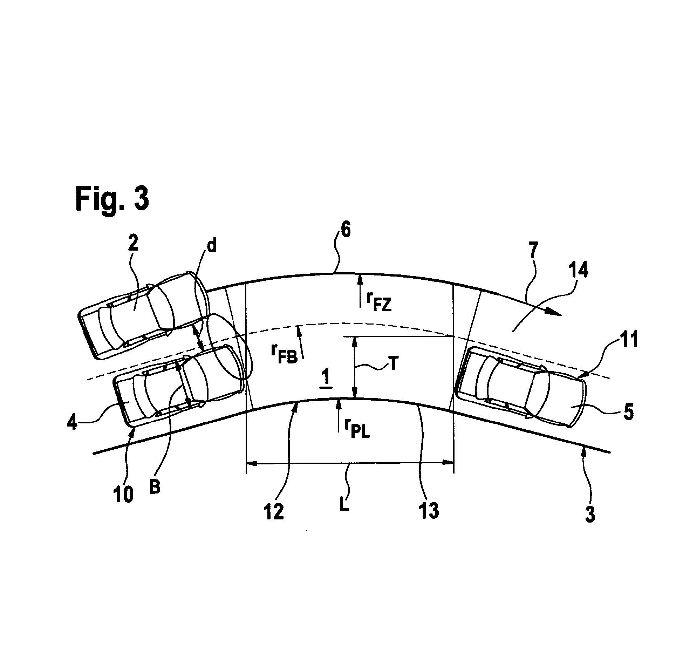

In Figur 3 ist eine gegenüber dem Beispiel nach Figur 1 abgewandelte Einparksituation dargestellt, wobei - wie in allen Figuren - sich jeweils entsprechende Elemente mit gleichen Bezugszeichen versehen sind. Nach Figur 3 ist eine Fahrzeugbahn 6 eines einzuparkenden Fahrzeugs 2 ebenfalls kurvenförmig, und zwar konvex, ausgebildet. Eine Fahrbahnbegrenzung 3 und bereits geparkte, eine Parklücke 1 begrenzende Fahrzeuge 4, 5 befinden sich in einer in etwa parallelen Anordnung zu der Fahrzeugbahn 6. In diesem Fall spricht man von einer aktiven Kurvenfahrt des einzuparkenden Fahrzeugs 2 hinsichtlich der Parklücke 1.

Die Parklücke 1, die insgesamt durch eine Schattierung kenntlich gemacht ist, ist in ihrer Gesamtheit konvex gekrümmt, wobei Begrenzungsobjekte 10, 11, 12 entsprechend Figur 1 von den geparkten Fahrzeugen 4, 5 und einem Bordsteinabschnitt 13 der Fahrbahnbegrenzung 3 gebildet werden. Die nutzbare Länge L der Parklücke 1 ist geringer als die durch einen Bogen gekennzeichnete maximale Parklückenlänge an der dem einzuparkenden Fahrzeug 2 zugewandten Seite. Auch die nutzbare Tiefe T der Parklücke 1 ist geringer als die tatsächliche Parklückentiefe, wie anhand der Schattierung ersichtlich.

In diesem Ausführungsbeispiel ist der Lenkwinkel des einzuparkenden Fahrzeugs 2 während des Vorbeifahrens in einer durch einen Pfeil 7 symbolisierten Vorwärtsrichtung an der Parklücke 1 kleiner 0°, und die Orientierung der Begrenzungsobjekte 10, 11, 12 - bezogen auf das einzuparkende Fahrzeug 2 - beträgt in etwa 0°; die Länge L der Parklücke 1 wird in Abhängigkeit des minimalen, durch eine Krümmung des Bordsteinabschnittes 13 angegebenen Parklückenradius $r_{PL}$, eines Vorbeifahrabstandes d des einzuparkenden Fahrzeugs 2 und einer Breite B des hinteren Begrenzungsobjektes 10 berechnet.

Ein Fahrzeugbahnradius $r_{FZ}$ der von dem einzuparkenden Fahrzeug 2 während des Vorbeifahrens an der Parklücke 1 befolgten Fahrzeugbahn 6 wird anhand des Lenkwinkels des einzuparkenden Fahrzeugs 2 bestimmt. In Abhängigkeit von dem Lenkwinkel sowie der Orientierung der Begrenzungsobjekte 10, 11, 12 wird ferner der jeweilige Vorbeifahrabstand d des einzuparkenden Fahrzeugs 2 von den Begrenzungsobjekten 10, 11, 12 berechnet. Darüber hinaus wird anhand der Orientierung der Begrenzungsobjekte 10, 11, 12 ein Fahrbahnradius $r_{FB}$ einer Fahrbahn 14, auf der sich sowohl die geparkten Fahrzeuge 4, 5 und die Parklücke 1 als auch das einzuparkende Fahrzeug 2 befmden, bestimmt. In Abhängigkeit des Fahrbahnradius $r_{FB}$ und der Breite B des hinteren Begrenzungsobjektes 10 wird der minimale Parklückenradius $r_{PL}$ bestimmt.

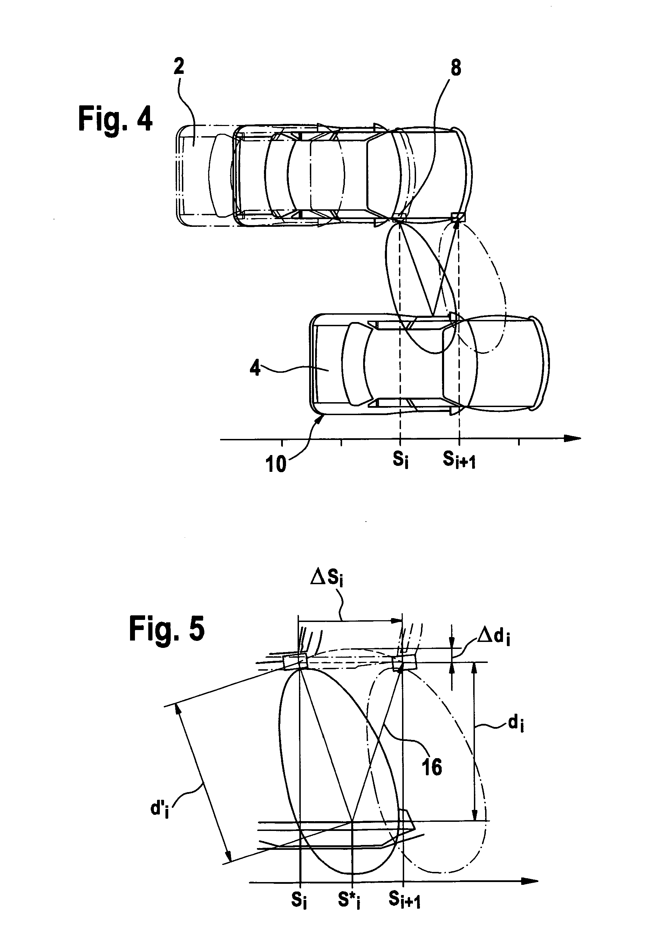

Figuren 4, 5 verdeutlichen einen Einfluss einer Signallaufzeit eines als Ultraschallsensor ausgebildeten Sensors 8 einer Sensoranordnung eines einzuparkenden Fahrzeugs 2 auf eine seitliche Abstandsmessung zu einem parkenden Fahrzeug 4. Während der Signallaufzeit legt das einzuparkende Fahrzeug 2 einen Weg $\Delta s_i$ zwischen einem ersten Wegpunkt $s_i$ und einem zweiten Wegpunkt $s_{i+1}$ zurück. Zwischen diesen Wegpunkten $s_i$, $s_{i+1}$ liegt ein Reflexionspunkt

$s_i^*$, der die Stelle angibt, an der das Sensorsignal an dem parkenden Fahrzeug 4 reflektiert wird.

Ausgehend von dem während des durch einen Pfeil 16 symbolisierten Laufs eines Signals von der Sensoranordnung des einzuparkenden Fahrzeugs 2 zu dem ein Begrenzungsobjekt 10 einer Parklücke darstellenden parkenden Fahrzeug 4 und zurück zu der Sensoranordnung zurückgelegten Weg $\Delta s_i$ des einzuparkenden Fahrzeugs 2 wird in Abhängigkeit dieses Weges $\Delta s_i$ ein tatsächlicher Vorbeifahrabstand $d_i$ des einzuparkenden Fahrzeugs 2 von dem Begrenzungsobjekt 10 berechnet wird. Dabei kann die Position des Reflexionspunktes $s_i^*$ in erster Näherung durch eine Mittelung des Abstandes des ersten Wegpunktes $s_i$ und des zweiten Wegpunktes $s_{i+1}$ gebildet werden, da die Geschwindigkeit des einzuparkenden Fahrzeugs 2 erheblich geringer ist als die die Signalgeschwindigkeit angebende Schallgeschwindigkeit. Der tatsächliche Vorbeifahrabstand $d_i$ lässt sich dann unter Berücksichtigung eines scheinbaren Vorbeifahrabstandes $d_i'$ gemäß der Formel

$$d_i = \sqrt{d_i'^2 - \frac{1}{4}(s_{i+1} - s_i)^2}$$

berechnen, wobei $d_i'$ auf der Annahme einer Halbierung der Signallaufzeit basiert. Es werden somit durch die Berücksichtigung der Signallaufzeit sowohl Abstand als auch Position eines Messwertes korrigiert. Der eingezeichnete Abstand $\Delta d_i$ kennzeichnet einen ohne Korrektur zuviel gemessenen, verschenkten Bereich, da ohne Korrektur die Messung einen zu großen Wert für den Vorbeifahrabstand ergeben würde; die Größenordnung dieses potentiellen Fehlers kann beispielsweise bei ca. 2 bis 5 cm liegen und ist zum Beispiel abhängig von dem Vorbeifahrabstand und der Zykluszeit des Meßsystems.

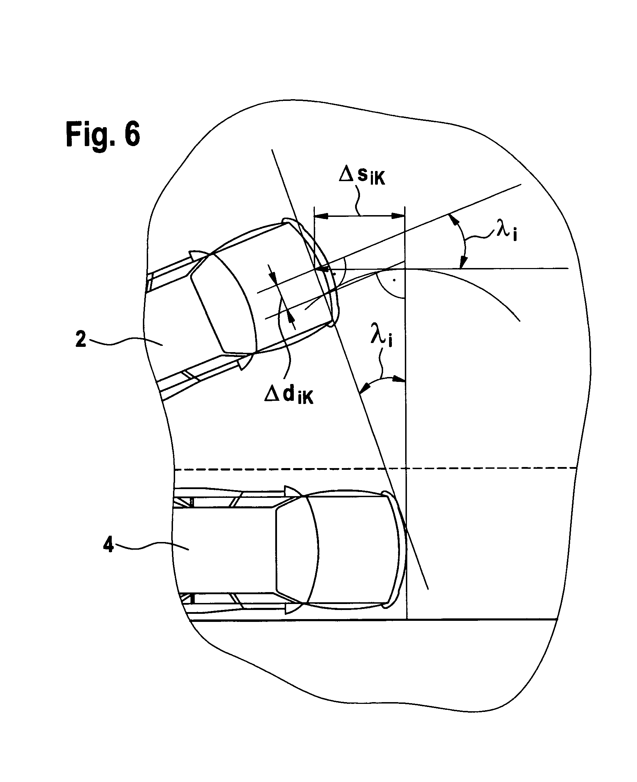

In Figur 6 sind zur Veranschaulichung ein Längenkorrekturwert $\Delta S_{iK}$, ein Tiefenkorrekturwert $\Delta d_{iK}$ und ein Orientierungswinkel $\lambda_i$ für eine passive Kurvenfahrt eines einzuparkenden Fahrzeugs 2 dargestellt, wobei der Orientierungswinkel $\lambda_i$ eine relative Orientierung des einzuparkenden Fahrzeugs 2 bei einer bestimmten Wegposition bezogen auf ein Begrenzungsobjekt in Form eines bereits parkenden Fahrzeugs 4 angibt.

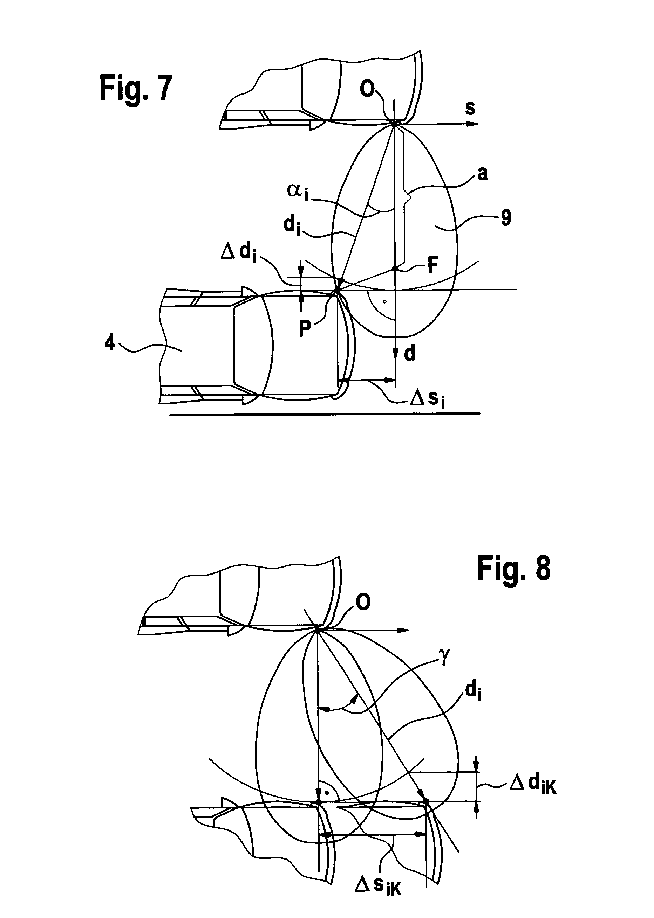

Figur 7 veranschaulicht - unter der Annahme, dass sich die Keule eines keulenförmigen Sensorfeldes 9 eines Sensors durch eine Bernoullische Lemniskate charakterisieren lässt, deren Brennpunkt F in einem Abstand a zu dem Sensor angeordnet ist - wie sich für einen einen Öffnungswinkel $\alpha_i$ an einem bestimmten Wegpunkt hinsichtlich eines Fahrzeugeckpunktes P eines Begrenzungsobjektes in Form eines bereits parkenden Fahrzeugs 4 berücksichtigenden Korrekturwert als Längenkorrekturwert $\Delta s_{iK}$ beispielhaft der Zusammenhang

$$\Delta s_{iK} = f(d_i) = d_i \cdot \sin\alpha_i$$

ergibt, wobei ein von dem Sensor gemessener Vorbeifahrabstand $d_i$ vorliegt und wobei gilt

$$d_i = a \cdot \sqrt{2 \cdot \cos\alpha_i} \quad \rightarrow \quad \alpha_i = \frac{1}{2}a \cdot \cos\left(2 \cdot \frac{d_i^2}{a^2}\right).$$

Der Sensor ist dabei in dem Ursprung eines Koordinatensystems angeordnet, an dessen x-Achse ein Weg s und an dessen y-Achse ein Vorbeifahrabstand d aufgetragen ist. Ein zugehöriger Tiefenkorrekturwert $\Delta d_{iK}$ kann sich beispielhaft nach folgender Gleichung ergeben:

$$\Delta d_{iK} = f(d_i) = d_i \cdot (1 - \cos\alpha_i).$$

Alternativ zu einer Bernoullischen Lemniskate könnte das Sensorfeld beispielsweise auch durch eine Strophoide, ein Kartesisches Blatt oder eine Parameterkurve charakterisiert sein.

Einen Einfluss des Einbauwinkels des Sensors veranschaulicht Figur 8, wobei ein den Einbauwinkel $\gamma$ des Sensors berücksichtigender Korrekturwert als Längenkorrekturwert $\Delta s_{iK}$ beispielhaft ausgehend von einem Vorbei-

fahrabstand $d_i$ wie folgt berechnet werden kann:

$$\Delta s_{iK} = f(d_i) = d_i \cdot \sin\gamma .$$

Und ein den Einbauwinkel $\gamma$ des Sensors berücksichtigender Korrekturwert als Tiefenkorrekturwert $\Delta d_{iK}$ kann beispielsweise dem Zusammenhang

$$\Delta d_{iK} = f(d_i) = d_i \cdot (1 - \cos\gamma)$$

folgen.

**Patentansprüche**

1. Verfahren zur Unterstützung eines Einparkvorgangs eines Fahrzeugs in eine seitlich zu dem zu parkenden Fahrzeug angeordnete Parklücke, wobei mittels einer Sensoranordnung des Fahrzeugs eine Länge und/oder eine Tiefe der Parklücke während eines Vorbeifahrens des Fahrzeugs an der Parklücke erfasst wird, **dadurch gekennzeichnet, dass** der Lenkwinkel des Fahrzeugs (2) während des Vorbeifahrens an der Parklücke (1) gemessen wird, dass die Orientierung von die Parklücke (1) begrenzenden Begrenzungsobjekten (10, 11, 12) bezüglich des Fahrzeugs (2) bestimmt wird, dass der Lenkwinkel mit der Orientierung der Begrenzungsobjekte (10, 11, 12) verglichen wird und dass in Abhängigkeit des Vergleichs des Lenkwinkels mit der Orientierung der Begrenzungsobjekte (10, 11, 12) die Länge (L) und/oder die Tiefe (T) der Parklücke (1) berechnet wird.

2. Verfahren nach Anspruch 1, **dadurch gekennzeichnet, dass** zu erwartende Begrenzungsobjekte in Form von geometrischen Daten der zu erwartenden Begrenzungsobjekte in einem Speicher abgelegt sind, dass die mittels der Sensoranordnung erfassten Begrenzungsobjekte (10, 11, 12) jeweils einem der in dem Speicher abgelegten Begrenzungsobjekte zugeordnet werden und dass jeweils das in dem Speicher abgelegte Begrenzungsobjekt für das erfasste Begrenzungsobjekt (10, 11, 12) angenommen wird.

3. Verfahren nach Anspruch 1 oder 2, **dadurch gekennzeichnet, dass** in Abhängigkeit von dem Lenkwinkel des Fahrzeugs (2) und der Orientierung der Begrenzungsobjekte (10, 11, 12) jeweils ein Vorbeifahrabstand (d) des Fahrzeugs (2) von den Begrenzungsobjekten (10, 11, 12) berechnet wird.

4. Verfahren nach einem der vorhergehenden Ansprüche, **dadurch gekennzeichnet, dass** anhand des Lenkwinkels ein Fahrzeugbahnradius ($r_{FZ}$) einer von dem Fahrzeug (2) während des Vorbeifahrens an der Parklücke (1) befolgten Fahrzeugbahn (6) bestimmt wird.

5. Verfahren nach einem der vorhergehenden Ansprüche, **dadurch gekennzeichnet, dass** anhand der Orientierung der Begrenzungsobjekte (10, 11, 12) ein Fahrbahnradius ($r_{FB}$) einer von dem Fahrzeug (2) befahrenen Fahrbahn (14) bestimmt wird.

6. Verfahren nach Anspruch 5, **dadurch gekennzeichnet, dass** in Abhängigkeit des Fahrbahnradius ($r_{FB}$) und einer Breite (B) eines vorderen Begrenzungsobjektes (11) und/oder eines hinteren Begrenzungsobjektes (10) ein minimaler Parklückenradius ($r_{PL}$) bestimmt wird.

7. Verfahren nach einem der vorhergehenden Ansprüche, **dadurch gekennzeichnet, dass** bei einem Lenkwinkel kleiner 0° oder größer 0° während des Vorbeifahrens und einer Orientierung der Begrenzungsobjekte (10, 11, 12) von 0° die Länge (L) der Parklücke (1) in Abhängigkeit des minimalen Parklückenradius ($r_{PL}$), des Vorbeifahrabstands (d) und einer Breite (B) eines vorderen Begrenzungsobjektes (11) und/oder eines hinteren Begrenzungsobjektes (10) berechnet wird.

8. Verfahren nach einem der vorhergehenden Ansprüche, **dadurch gekennzeichnet, dass** bei einem Lenkwinkel kleiner 0° oder größer 0° während des Vorbeifahrens und einer einen Vorzeichenwechsel aufweisenden Änderung einer Orientierung der Begrenzungsobjekte (10, 11, 12) die Länge (L) der Parklücke (1) in Abhängigkeit von in einem Speicher abgelegten geometrischen Daten des Fahrzeugs (2) berechnet wird.

9. Verfahren nach einem der vorhergehenden Ansprüche, **dadurch gekennzeichnet, dass** die Sensoranordnung einen ein keulenförmiges Sensorfeld (9) aufweisenden Sensor (8) umfasst und dass eine Position einer dem Fahrzeug (2) zugewandten Ecke der Parklücke (1) in Abhängigkeit von einem Einbauwinkel ($\gamma$) des Sensors (8) im Fahrzeug (2) bestimmt wird.

10. Verfahren nach einem der vorhergehenden Ansprüche, **dadurch gekennzeichnet, dass** die Sensoranordnung einen ein keulenförmiges Sensorfeld (9) aufweisenden Sensor (8) umfasst und dass eine Position einer dem Fahrzeug (2) zugewandten Ecke der Parklücke (1) in Abhängigkeit von einem Öffnungswinkel ($\alpha$) des Sensorfeldes (9) bestimmt wird.

11. Verfahren nach einem der vorhergehenden Ansprüche, **dadurch gekennzeichnet, dass** der während des Laufs eines Signals von der Sensoranordnung des Fahrzeugs (2) zu einem Begrenzungsobjekt (10) und zurück zu der Sensoranordnung zurückgelegte Weg ($\Delta s_i$) des Fahrzeugs (2) bestimmt wird und dass in Abhängigkeit von dem zurückgelegten Weg ($\Delta s_i$) ein Vorbeifahrabstand ($d_i$) des Fahrzeugs (2) von dem Begrenzungsobjekt (10) berechnet wird.

12. Verfahren nach einem der vorhergehenden Ansprüche, **dadurch gekennzeichnet, dass** in Abhängigkeit der berechneten Länge (L) und/oder Tiefe (T) der Parklücke (1) eine von dem Fahrzeug (2) während des Einparkvorgangs zu verfolgende Einparkbahn berechnet wird.

## Claims

1. Method for assisting in parking a vehicle in a parking space which is arranged laterally with respect to the vehicle to be parked, wherein a length and/or a depth of the parking space is sensed by means of a sensor arrangement in the vehicle while the vehicle is driving past the parking space, **characterized in that** the steering angle of the vehicle (2) is measured while said vehicle (2) is driving past the parking space (1), **in that** the orientation of boundary objects (10, 11, 12) which bound the parking space (1) is determined in relation to the vehicle (2), **in that** the steering angle is compared with the orientation of the boundary objects (10, 11, 12), and **in that** the length (L) and/or the depth (T) of the parking space (1) are/is calculated as a function of the comparison of the steering angle with the orientation of the boundary objects (10, 11, 12).

2. Method according to Claim 1, **characterized in that** the expected boundary objects are stored in a memory in the form of geometric data of the expected boundary objects, **in that** the boundary objects (10, 11, 12) sensed by means of the sensor arrangement are each assigned to one of the boundary objects stored in the memory, and **in that** in each case the boundary object which is stored in the memory is assumed to be the sensed boundary object (10, 11, 12).

3. Method according to Claim 1 or 2, **characterized in that** a driving-past distance (d) of the vehicle (2) from the boundary objects (10, 11, 12) is respectively calculated as a function of the steering angle of the vehicle (2) and the orientation of the boundary objects (10, 11, 12).

4. Method according to one of the preceding claims, **characterized in that** a vehicle path radius ($r_{FZ}$) of a vehicle path (6) which is being followed by the vehicle (2) while said vehicle is driving past the parking space (1) is determined on the basis of the steering angle.

5. Method according to one of the preceding claims, **characterized in that** a roadway radius ($r_{FB}$) of a path (14) which is being driven along by the vehicle (2) is determined on the basis of the orientation of the boundary objects (10, 11, 12).

6. Method according to Claim 5, **characterized in that** a minimum parking space radius ($r_{PL}$) is determined as a function of the roadway radius ($r_{FB}$) and of a width (B) of a front boundary object (11) and/or of a rear boundary object (10).

7. Method according to one of the preceding claims, **characterized in that** in the case of a steering angle less than 0° or greater than 0° during the driving past and in the case of orientation of the boundary objects (10, 11, 12) of 0°, the length L of the parking space (1) is calculated as a function of the minimum parking space radius ($r_{PL}$) of the driving-past distance (d) and of a width (B) of a front boundary object (11) and/or of a rear boundary object (10).

8. Method according to one of the preceding claims, **characterized in that** in the case of a steering angle less than 0° and greater than 0° while the vehicle (2) is driving past and in the case of a change in the orientation of the boundary objects (10, 11, 12) which involves a change in sign, the length (L) of the parking space (1) is calculated as a function of geometric data of the vehicle (2) which are stored in a memory.

9. Method according to one of the preceding claims, **characterized in that** the sensor arrangement comprises a sensor (8) which has a lobe-shaped sensor field (9), and **in that** a position of a corner, facing the vehicle (10), of the parking space (1) is determined as a function of an installation angle ($\gamma$) of the sensor (8) in the vehicle (2).

10. Method according to one of the preceding claims, **characterized in that** the sensor arrangement comprises a sensor (8) having a lobe-shaped sensor field (9), and **in that** a position of a corner, facing the vehicle (2), of the parking space (1) is determined as a function of an angle of aperture ($\alpha$) of the sensor field (9).

11. Method according to one of the preceding claims, **characterized in that** the distance ($\Delta s_i$) of the vehicle (2) which is travelled during the propagation of a signal from the sensor arrangement of the vehicle (2) to a boundary object (10) and back to the sensor arrangement is determined, and **in that** a driving-past distance ($d_i$) of the vehicle (2) from the boundary object (10) is calculated as a function of the distance ($\Delta s_i$) travelled.

12. Method according to one of the preceding claims, **characterized in that** a parking path which is to be followed by the vehicle (2) during the parking operation is calculated as a function of the calculated length (L) and/or depth (T) of the parking space (1).

**Revendications**

1. Procédé d'assistance à une opération de stationnement d'un véhicule dans un emplacement de stationnement disposé latéralement par rapport au véhicule à stationner, dans lequel la longueur et/ou la profondeur de l'emplacement de stationnement sont détectées au moyen d'un système de détecteur du véhicule pendant que le véhicule passe le long de l'emplacement de stationnement,
   **caractérisé en ce que**
   l'angle de direction du véhicule (2) pendant le déplacement le long de l'emplacement de stationnement (1) est mesuré, **en ce que** l'orientation d'objets (10, 11, 12) qui délimitent l'emplacement de stationnement (1) par rapport au véhicule (2) est déterminée,
   **en ce que** l'angle de direction est comparé à l'orientation des objets de délimitation (10, 11, 12) et **en ce que** la longueur (L) et/ou la profondeur (T) de l'emplacement de stationnement (1) sont calculées en fonction de la comparaison de l'angle de direction et de l'orientation des objets de délimitation (10, 11, 12).

2. Procédé selon la revendication 1, **caractérisé en ce que** des objets de délimitation auxquels on peut s'attendre sont placés dans une mémoire sous la forme de données géométriques des objets de délimitation auxquels on peut s'attendre, **en ce que** chacun des objets de délimitation (10, 11, 12) détectés au moyen du système de détecteur est associé à un des objets de délimitation conservé dans la mémoire et **en ce que** l'objet de délimitation conservé dans la mémoire est supposé être l'objet de délimitation (10, 11, 12) détecté correspondant.

3. Procédé selon les revendications 1 ou 2, **caractérisé en ce que** la distance (d) de déplacement du véhicule (2) par rapport aux objets de délimitation (10, 11, 12) est calculée en fonction de l'angle de direction du véhicule (2) et de l'orientation des objets de délimitation (10, 11, 12).

4. Procédé selon l'une des revendications précédentes, **caractérisé en ce que** le rayon ($r_{FZ}$) de la trajectoire (6) suivie par le véhicule (2) pendant qu'il se déplace le long de l'emplacement de stationnement (1) est déterminé à l'aide de l'angle de direction.

5. Procédé selon l'une des revendications précédentes, **caractérisé en ce que** le rayon ($r_{FB}$) de la trajectoire (14) parcourue par le véhicule (2) est déterminé à l'aide de l'orientation des objets de délimitation (10, 11, 12).

6. Procédé selon la revendication 5, **caractérisé en ce que** le rayon minimum ($r_{PL}$) de l'emplacement de stationnement est déterminé en fonction du rayon ($r_{FB}$) de la trajectoire du véhicule et de la largeur (B) de l'objet de délimitation (11) situé à l'avant et/ou de l'objet de délimitation (10) situé à l'arrière.

7. Procédé selon l'une des revendications précédentes, **caractérisé en ce que** si l'angle de direction est inférieur à 0° ou supérieur à 0° pendant le passage le long de l'emplacement de stationnement et si l'orientation des objets de délimitation (10, 11, 12) est de 0°, la longueur (L) de l'emplacement de stationnement (1) est calculée en fonction du rayon minimum ($r_{PL}$) de l'emplacement de stationnement, de la distance (d) de passage devant l'emplacement de stationnement et de la largeur (B) de l'objet de délimitation (11) situé à l'avant et/ou de l'objet de délimitation (10) situé à l'arrière.

8. Procédé selon l'une des revendications précédentes, **caractérisé en ce que** si l'angle de direction est inférieur à 0° ou supérieur à 0° pendant le passage devant l'emplacement de stationnement et si la modification de l'orientation des objets de délimitation (10, 11, 12) présente un changement de signe, la longueur (L) de l'emplacement de stationnement (1) est calculée en fonction de données géométriques du véhicule (2) conservées dans une mémoire.

9. Procédé selon l'une des revendications précédentes, **caractérisé en ce que** le système de détecteur comporte un détecteur (8) qui présente un champ de détection (9) en forme de lobe et **en ce que** la position du coin de l'emplacement de stationnement (1) tourné vers le véhicule (2) est déterminée en fonction de l'angle d'incorporation (γ) du détecteur (8) dans le véhicule (2).

10. Procédé selon l'une des revendications précédentes, **caractérisé en ce que** le système de détecteur comporte un détecteur (8) qui présente un champ de détection (9) en forme de lobe et **en ce que** la position du coin de l'emplacement de stationnement (1) tourné vers le véhicule (2) est déterminée en fonction de l'angle d'ouverture (α) du champ de détection (9).

11. Procédé selon l'une des revendications précédentes, **caractérisé en ce que** le chemin ($\Delta s_i$) parcouru par le véhicule (2) pendant la durée de propagation d'un signal provenant du système de détecteur du véhicule (2) à un objet de délimitation (10) et en retour vers le système de détecteur est déterminé et **en ce que** la distance ($d_i$) de passage du véhicule (2) devant l'objet de délimitation (10) est calculée en fonction du chemin parcouru ($\Delta s_i$).

12. Procédé selon l'une des revendications précédentes, **caractérisé en ce que** la trajectoire de stationnement que doit suivre le véhicule (2) pendant l'opération de stationnement est calculée en fonction de la longueur calculée (L) et/ou de la profondeur calculée (T) de l'emplacement de stationnement (1).

**Fig. 1**

8 9 6

2 7

17 11

4 5

T 1

10 $L_H$ $L_V$ 3

12 $L_+$ $L$ 13

**Fig. 2**

8

2 $\varphi$

$\gamma$ 9

$\alpha$ 1

10 15

## Fig. 3

Fig. 4

$S_i$   $S_{i+1}$

10

Fig. 5

$\Delta S_i$

$\Delta d_i$

$d_i$

16

$d'_i$

$S_i$   $S^*_i$   $S_{i+1}$

14

**Fig. 6**

$\Delta s_{iK}$

$\lambda_i$

2

$\lambda_i$

$\Delta d_{iK}$

4

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251558 A1
- DE 10220426 A1